# EUROPÄISCHE PATENTSCHRIFT

(11) **EP 0 638 856 B1**
(45) Veröffentlichungstag und Bekanntmachung des Hinweises auf die Patenterteilung: **22.04.1998**
(21) Anmeldenummer: 94112240.0
(22) Anmeldetag: 05.08.1994
(51) Int. Cl.: G05D 16/06

(54) **Druckregler**
Pressure regulator
Régulateur de pression

(30) Priorität: 11.08.1993 DE 4327527; 05.07.1994 AT 1327/94
(43) Veröffentlichungstag der Anmeldung: 15.02.1995
(73) Patentinhaber: Joh. Vaillant GmbH u. Co., 42850 Remscheid (DE); n.v. Vaillant s.a., 1620 Drogenbos (BE); VAILLANT S.A.R.L, 94045 Créteil Cedex (FR); VAILLANT Ges.m.b.H, 1231 Wien (AT); Vaillant Ltd., Rochester Kent ME2 4EZ (GB); Vaillant B.V., 1100 DT Amsterdam (NL); Vaillant GmbH, 8953 Dietikon 1 (CH)
(72) Erfinder: Goebel, Peter, D-42929 Wermelskirchen (DE); Hangauer, Wilfried, Dr., D-42499 Hückeswagen (DE); Menne, Wilfried, D-42105 Wuppertal (DE); Richter, Klaus, D-42855 Remscheid (DE); Boller, Sven, D-49565 Bramsche (DE); Quatmann, Anton, D-49377 Vechta (DE); Petersmann, Martin, D-49086 Osnabrück (DE); Sparenberg, Wilfried, D-49492 Westerkappeln (DE)
(74) Vertreter: Heim, Johann-Ludwig, Dipl.-Ing.

(56) Entgegenhaltungen:
- EP-A- 0 462 583
- US-A- 4 909 278

## Beschreibung

Die Erfindung bezieht sich auf einen Druckregler gemäß dem Oberbegriff des Anspruches 1.

Bei solchen Druckreglern ist es, um diese universell einsetzen zu können, erforderlich, einen über die Serienfertigung konstanten Reglerdruck beziehungsweise einen konstanten Widerstand des Gasventiles sicherzustellen. Dabei spielen die Toleranzen der Lagegenauigkeiten der Steuer- und der Servomembrane eine wesentliche Rolle.

Bei den bekannten Druckreglern der eingangs erwähnten Art sind die Servo- und die Steuermembrane in entsprechend bearbeiteten Aufnahmen in einem Gehäuse gehalten. Dadurch ist es aber bei einem üblichen Herstellungsaufwand bei der Herstellung der Einzelteile und der Montage derselben kaum möglich, die erforderliche Genauigkeit der gegenseitigen Lage dieser beiden Membranen sicherzustellen.

Ziel der Erfindung ist es, diesen Nachteil zu vermeiden und einen Druckregler der eingangs erwähnten Art vorzuschlagen, bei dem auf einfache Weise die erforderliche Genauigkeit der gegenseitigen Lagen der Servo- und der Steuermembrane sichergestellt werden kann.

Erfindungsgemäß wird dies bei einem Druckregler der eingangs erwähnten Art durch die kennzeichnenden Merkmale des Anspruches 1 erreicht.

Durch die vorgeschlagenen Maßnahmen wird es ermöglicht, den sehr wesentlichen Abstand der beiden Membranen sicherzustellen, durch den ein optimaler Betrieb des Druckreglers erreichbar ist.

Die Lage der Membranen zueinander ist deshalb so wichtig, da es je nach Form- und Lagetoleranz zu Auswirkungen auf den sich einstellenden Reglerdruck kommt, der das Kräftegleichgewicht an der Servomembrane herstellen muß.

Die Justage des Abstandes zwischen Steuer- und Servomembrane dient also effektiv zur Erreichung der richtigen wirksamen Membranfläche.

Die Erfindung wird nun anhand der Zeichnung näher erläutert.

Dabei zeigen:

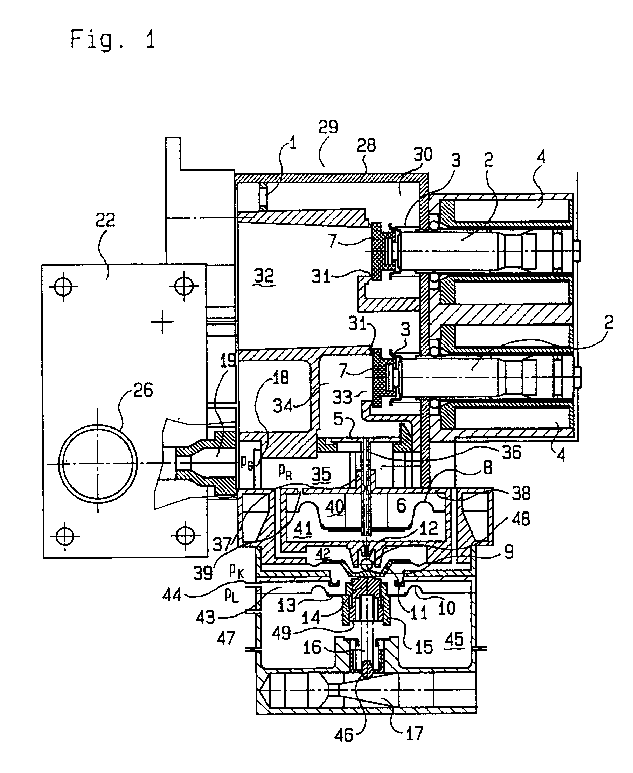

Fig. 1 schematisch einen erfindungsgemäßen Druckregler und
Fig. 2 einen an eine Heizeinrichtung angeschlossenen Druckregler.

Gleiche Bezugszeichen bedeuten in allen Figuren gleiche Einzelheiten.

In einem Gehäuse 28 eines erfindungsgemäßen Druckreglers 29 ist ein mit einem Gassieb 1 versehener Gaseinlaß 30 vorgesehen, der zu einem von einem Gasventilkörper 2, der mittels einer Druckfeder 3 gegen seine geschlossene, an einem Ventilsitz 31 anliegende Stellung vorgespannt und mit einem Dichtkörper 7 versehen ist, führt. Dabei ist der Ventilkörper 2 aus einem magnetisierbaren Material hergestellt und von einer an eine elektrische Spannung legbaren Spule 4 steuerbar.

Der Ventilsitz 31 begrenzt eine Einlaßkammer 32, die über eine von einem weiteren Ventilsitz 31 umgebene Öffnung 33 mit einem Überströmraum 34 verbunden ist, wobei der weitere Ventilsitz 31 mit einem weiteren Gasventilkörper 2 mit einem weiteren Dichtkörper 7 zusammenwirkt, der von einer weiteren Spule 4 gesteuert ist.

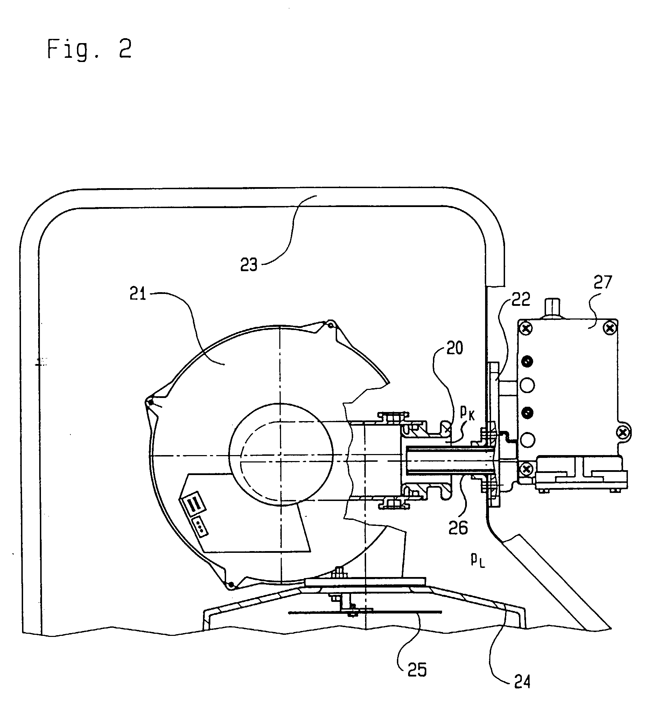

Der Überströmraum 34 ist über ein Gasregelventil 5 mit dem Ausströmkanal 35 verbindbar, der über eine Hauptmengendrossel 18 mit einer Gasdüse 19 verbunden ist, die im Bereich einer Anschlußkonsole 22 in ein Koaxialrohr 26 mündet (Fig. 2).

Dabei ist im Bereich eines Verbindungsrohres 36 des Gasregelventiles 5 mit einer Regelmembrane 8 eine Dämpfungsdüse 6 angeordnet, wobei das Verbindungsrohr 36 in einer Führung 37 einer Trennwand 38 geführt ist.

Der Ausströmkanal 35 ist über eine Überströmöffnung 39 mit einem Raum 40 verbunden, der von der Regelmembrane 8 begrenzt ist, die mit dem Verbindungsrohr 36 verbunden ist. Ein unter der Regelmembrane 8 befindlicher Raum 41 ist über ein Kugelventil 9, das von einer Druckfeder 12 gegen dessen Offenstellung vorgespannt ist, mit einem Raum 42 verbindbar. Dabei ist das Kugelventil 9 an einer Servomembrane 11 abgestützt.

Die Servomembrane 11 begrenzt mit einer Steuermembrane 10 einen Raum 43, der über eine Leitung 44 mit dem hinter einer Luftblende 20 (Fig. 2) herrschenden Druck p_{K} beaufschlagt ist.

In der Steuermembrane 10 ist ein Steuermembranteller 13 gehalten, in dem ein Halteteil 15 eingepreßt ist, der mit einem Innengewinde 49 versehen ist. In diesem Halteteil 15 ist eine Reglerdruckeinstellschraube 14 verstellbar gehalten, die den Abstand zwischen der Steuermembrane 10 und der Servomembrane 11 festlegt. Dabei ist die Steuermembrane 10 über eine Nullpunktfeder 16 vorgespannt, die in einer Aufnahme 46 abgestützt ist, die mittels eines konisch ausgebildeten Nullpunkteinstellers 17 verstellbar ist. Dabei ist der unter der Steuermembrane 10 liegende Raum 45 über eine Öffnung 47 mit einem Druck p_{L} beaufschlagt, der einem Druck in der geschlossenen Kammer 23 entspricht, in der die Luftblende 20 angeordnet ist.

Wie aus der Fig. 2 zu ersehen ist, ist an der Anschlußkonsole 22 eine handelsübliche Gasregelarmatur 27 angeschlossen, die den justierbaren Druckregler 29 enthält.

Wie aus der Fig. 2 zu ersehen ist, gelangen Gas und Luft über das Innere des Koaxialrohres 26 und die Luftblende 20 zu einem Gebläse 21, das in der Unterdruckkammer 23 angeordnet ist. Dabei mündet die Druckseite des Gebläses 21 im Bereich einer Gemischverteilhaube 24, wobei eine Verteileinrichtung 25 für einen Gasbrenner eines Wasserheizers vorgesehen ist.

Das aus dem Druckregler 29 und der Konsole 27 sowie der Gasdüse 19, dem Koaxialrohr 26, der Luftblende 20 und dem Gebläse 21 bestehende Gas-Luft-Verbundsystem versorgt den nicht dargestellten Brenner des Heizgerätes mit einem dem jeweiligen Lastzustand entsprechend benötigten Gas-Luft-Gemisch in einem definierten Mischungsverhältnis. Dabei wird das Gas mit der Luft auf der Saugseite des Gebläses 21 gemischt und druckseitig in die Gemischverteilhaube 24 geblasen. Das Gebläse 21 und die Verteilhaube 24 befinden sich in der Unterdruckkammer 23, an die die Anschlußkonsole 22 mit dem Gasdruckregel 29 angeflanscht ist. Das Gas wird durch den inneren Teil des Koaxialrohres in den Saugeinlaß des Gebläses 21 geleitet. Der Gasdruckregler 29 wird über den Differenzdruck p_{K} - p_{L} gesteuert, der durch den Verbrennungsluftstrom über die Luftblende in Abhängigkeit von der Gebläsedrehzahl erzeugt wird. Die Drücke p_{L} und p_{K} werden über die Anschlußkonsole 22 beziehungsweise über das Koaxialrohr zum Gasdruckregler geführt.

An der Steuermembrane 10 des im wesentlichen aus der Steuermembrane 10, der Servomembrane 11 und der Regelmembrane 8 sowie dem Gasregelventil 5 gebildeten Druckreglers 29 liegt als Führungsgröße der Differenzdruck p_{L} = p_{K} - p_{L} an, wobei p_{L} den Luftdruck in der Unterdruckkammer 23 und p_{K} den Druck stromab der Luftblende 20 bedeuten. Dabei übt der Differenzdruck p_{L} eine Kraft auf die Steuermembrane 10 aus, wobei die Steuermembrane 10 eine Kraft auf die Servomembrane 11 ausübt.

Das Kugelventil 9 gibt dabei einen Regelspalt 48 frei, der so groß ist, daß sich oberhalb der Servomembrane 11 ein Druck einstellt, der die Kraft der Steuermembrane 10 im Gleichgewicht hält. Die Kugelrückstellfeder 12 bewirkt dabei, daß die Kugel 9 immer im festen Kontakt mit der Servomembrane 11 gehalten wird.

Dieser sich einstellende Regelspalt 48 bewirkt dann einen Druck unterhalb der Regelmembrane 8, die wieder das Regelventil 5 in eine Stellung bringt, bei der die Kräfte an der Regelmembrane 8 im Gleichgewicht stehen. Stromab des Regelventils 5 stellt sich bei festem Membranflächenverhältnis ein nur von der Führungsgröße abhängiger Reglerdruck ein. Dieser Zusammenhang zwischen Führungsgröße und Gasdruck ist daher auch unabhängig von der Geräteleistung und der Gasart. Erst durch die nachgeschaltete Gasdüse 19 wird bestimmt, welcher Volumenstrom diesem geregelten Druck zugeordnet wird.

Das Gasregelventil 5 öffnet und schließt stufenlos den Gasweg in Abhängigkeit von der angelegten Führungsgröße p_{L}. Das Gasregelventil 5 ist durchgehend durchbohrt, so daß sich ein mit dem Gaseingangsdruck korrelierender Druck unterhalb der Regelmembrane 8 ausbilden kann.

Steigt zum Beispiel der Eingangsdruck an, so steigt auch der Druck unterhalb der Regelmembrane 8 und oberhalb der Servomembrane 11. Um bei schnellen Druckwechseln, wie zum Beispiel Stößen, starkes Überschwingen zu vermeiden, ist in die Bohrung im Gasregelventil 5 eine Dämpfungsdüse 6 eingesetzt. Da nun die Kraft der Steuermembrane 10 gleich bleibt, das heißt, die Führungsgröße bleibt konstant, stellt sich ein größerer Regelspalt 48 beim Kugelventil 9 ein. Der Druck fällt ab, und das Gasregelventil 5 bewegt sich in Richtung "Schließen", bis sich wiederum ein Gleichgewicht einstellt, das dann erreicht ist, wenn sich hinter dem Gasregelventil 5 der gleiche Druck wie vor der Eingangsdruckerhöhung eingestellt hat.

In der Serienfertigung kommt es durch Form- und Lagetoleranzen der Bauteile dazu, daß die Zuordnung der Membranen 10, 11 zueinander nicht immer exakt dieselbe ist und die wirksamen Membranflächen streuen. Dies hat zur Folge, daß sich bei gleichem Steuerdruck p_{L} = p_{K} - p_{L} nicht immer der gleiche Reglerdruck p_{R} einstellt.

Die daraus resultierende Durchsatzabweichung kann nach der Fertigung des Gasdruckreglers durch Justage der nachgeschalteten Hauptmengendrossel 18 kompensiert werden, jedoch wird dadurch nur die Toleranz für einen bestimmten Durchsatz eliminiert beziehungsweise für das Gasheizgerät, das den gleichen maximalen Durchsatz hat, wie er während der Justage herrschte, angepaßt. Die Justage erfolgt beim Armaturenhersteller immer gleich und unabhängig, in welchem Gerätetyp die Gasarmatur zum Einsatz kommt. Bei einem Wechsel einer Gasdüse 19 wirkt die Justage nicht mehr voll.

Dies läßt sich wie folgt erklären:

Betrachtet man die einmal justierte Hauptmengendrossel 18 als fix, so handelt es sich in Kombination mit der Gasdüse 19 um zwei in Reihe geschaltete Widerstände. Liegt zum Beispiel der Reglerdruck p_{R} bei einer Gasarmatur 27 niedriger als der Soll-Wert, so wird bei der Justage nach der Fertigung der Gasarmatur 27 die Hauptmengendrossel 18 weiter geöffnet. Wird diese Gasarmatur 27 mit einer anderen Gasdüse 19 kombiniert, so stellt sich wegen der weiter geöffneten Hauptmengendrossel 18 vor der Gasdüse 19 ein anderer Vordruck ein als mit einer Armatur 27 mit korrektem Reglerdruck p_{R}.

Durch den in den Steuermembranteller 13 eingepreßten Halteteil 15 und der in diesen Halteteil 15 eingesetzten Schraube 14 kann der Abstand der Servomembrane 11 von der Steuermembrane 10 und somit die wirksame Membranfläche eingestellt werden. Die Schraube 14 nimmt dabei auch die Nullpunktfeder 16 auf.

Durch die Einstellung des Abstandes zwischen der Steuermembrane 10 und der Servomembrane 11 können die oben erwähnten Lagetoleranzen der Membranen 10 und 11 zueinander ausgeglichen werden, wodurch sich ein konstanter Reglerdruck p_{R} erreichen läßt und die Hauptmengendrossel immer den gleichen Widerstand ergibt, wodurch sich beim Wechsel einer Gasdüse 19 eine Nachjustierung der Gasarmatur erübrigt und diese universell eingesetzt werden kann.

## Patentansprüche

1. Druckregler für ein gasbeheiztes Heizgerät mit einem über Drosseln mit einem Lufteinlaß und einem Gaseinlaß verbundenen Gebläse (21), dessen Druckseite mit einem Brenner verbunden ist, wobei die Abströmseite einer Luftblende (20) mit einem von einer Steuermembrane (10) und einer Servomembrane (11) begrenzten Raum (43) des Druckreglers (29) verbunden ist und ein von der Steuermembrane (10) begrenzter Raum (45) vom Druck in der Unterdruckkammer beziehungsweise vor der Luftblende saugseitig des Gebläses beaufschlagt ist und die Servomembrane (11) ein Ventil (12) steuert, das den Zustrom zu einem von einer Regelmembrane (8) begrenzten Raum (41) beeinflußt, die ein Gasregelventil (5) steuert, **dadurch gekennzeichnet**, daß in einer der, einen Raum (43) begrenzenden, Steuermembrane (10) und Servomembrane (11) ein Halteteil (15) mit einem Innengewinde (49) eingepreßt ist, in dem eine Schraube (14) verstellbar gehalten ist, die den Abstand der beiden Membranen (10, 11) bestimmt.

## Claims

1. Pressure controller for a gas-fired heater having a blower (21) connected via throttles with an air inlet and a gas inlet, the pressure side of the said blower being connected with a bumer, with the efflux side of an throttling point (20) in the air stream being connected with a space (43) of the pressure controller (29), such space being delimited by a control diaphragm (10) and a servo diaphragm (11), and a space (45) delimited by the control diaphragm (10) is charged with the pressure in the low-pressure chamber (23) and/or ahead of the throttling point 20 on the suction side of the blower (21), and the servo diaphragm (11) controls a valve (12) which influences the afflux to a space (41) delimited by a control diaphragm (8) controlling a gas control valve (5), **characterized in that** one of the diaphragms delimiting a space 43, namely the control diaphragm (10) and servo diaphragm (11), comprises a pressed-in retaining member (15) with an intemal thread (49) holding an adjustable screw (14) which determines the distance between the two diaphragms (10, 11).

## Revendications

1. Régulateur de pression pour un appareil de chauffage au gaz avec un ventilateur (21) relié par l'intermédiaire d'étranglements à une entrée d'air et une entrée de gaz, et dont la sortie communique avec un brûleur, la sortie d'une buse d'air (20) étant reliée à un espace (43) du régulateur de pression (29), délimité par une membrane principale (10) et une servomembrane (11), et un espace (45) délimité par la membrane (10) se trouvant sous la pression régnant dans la chambre de dépression (23) respectivement en amont de la buse (20) du côté aspiration du ventilateur (21), et la membrane (11) commandant un clapet (12) qui règle l'alimentation d'un espace (41) délimité par une membrane régulatrice (8) qui agit sur un clapet régulateur de gaz (5), **caractérisé par le fait** que l'une des membranes (10) ou (11), délimitant un espace (43), comporte une pièce taraudée (15) dont le filetage (49) reçoit une vis (14) qui détermine la distance entre les deux membranes (10, 11).
